# EUROPEAN PATENT SPECIFICATION

(11) **EP 0 650 927 B1**
(45) Date of publication and mention of the grant of the patent: **19.03.1997**
(21) Application number: 94114064.2
(22) Date of filing: 08.09.1994
(51) Int. Cl.: C01F 17/00

(54) **Method for the preparation of lanthanum manganite powder**
Verfahren zur Herstellung von Lanthanumanganitpulver
Méthode de préparation de poudre de manganite de lanthane

(30) Priority: 18.10.1993 JP 259544/93
(43) Date of publication of application: 03.05.1995
(73) Proprietor: Shin-Etsu Chemical Co., Ltd., Chiyoda-ku Tokyo 100 (JP)
(72) Inventor: Ishiii, Masatoshi, Fukui-shi, Fukui-ken (JP); Sakai, Shigeru, Takefu-shi, Fukui-ken (JP); Fujima, Yoshihiko, Fukui-shi, Fukui-ken (JP); Yoshida, Akihiko, Takefu-shi, Fukui-ken (JP); Yoshida, Norifumi, Fukui-shi, Fukui-ken (JP)
(74) Representative: Raeck, Wilfrid, Dipl.-Ing.

(56) References cited:
- DATABASE WPI Week 9216, Derwent Publications Ltd., London, GB; AN 92-129191 & JP-A-4 074 721 (NIKKATO KK) 10 March 1992

## Description

### BACKGROUND OF THE INVENTION

The present invention relates to a method for the preparation of a lanthanum manganite powder. More particularly, the invention relates to a method for the preparation of a powder of lanthanum manganite with optional substitution of strontium for a part of lanthanum obtained by the precipitation of a composite carbonate of the elements followed by the calcination of the precipitates into an oxide powder and suitable for use as a base material of various kinds of catalysts, electrodes and the like.

As is known, lanthanum manganite or lanthanum-strontium composite manganite in the form of a powder is a material useful as a base material of various kinds of catalysts, electrodes and the like and is prepared conventionally by a process in which powders of lanthanum oxide, manganese carbonate and, optionally, strontium carbonate taken each in a specified amount are blended together as uniformly as possible either as dry or as wetted and the powder blend is calcined at a high temperature of 1200 °C or higher. This calcination method of a powder blend, however, has a problem that it is a very difficult matter to achieve complete conversion of the powder blend into a composite oxide of lanthanum manganite leaving a substantial amounts of the starting oxide and/or carbonates unreacted even by almost impracticably extending the calcination time or by further increasing the calcination temperature. When a lanthanum manganite powder containing a substantial amount of unreacted lanthanum oxide as one of the starting materials is used as a material for the preparation of a sintered body, a great adverse influence is caused on the mechanical strength of the sintered body or in the electric properties of the sintered body used as an electrode. When the composite oxide of lanthanum manganite is to be used in the form of a powder as such, furthermore, coarsening of the particles is an unavoidable consequence of the calcination process performed at a so high temperature for a so long time. Accordingly, the coarsened particles in most cases must be subjected to an additional fine pulverization treatment necessarily resulting in a great increase in the production cost of the lanthanum manganite powder.

Japanese Patent Kokai 4-74721 proposes an alternative method to the above described calcination method of a powder blend for the preparation of a strontium-substituted lanthanum manganite powder, according to which an aqueous solution of ammonium carbonate is added to an aqueous solution of water-soluble salts of lanthanum, strontium and manganese so as to effect coprecipitation of the carbonates of the respective elements and the precipitates are collected, dried and calcined into a strontium-substituted lanthanum manganite powder. This method is also not free from several problems. For example, the coprecipitation of lanthanum and manganese is sometimes incomplete and the carbonates of lanthanum and manganese precipitate separately resulting in microscopic inhomogeneity of the composite oxide obtained by the calcination of the precipitates. While the particle configuration of the thus obtained precipitates is mostly globular, furthermore, the precipitates contain a substantial amount of platelet-like particles and such a heterogeneous particle configuration of the precipitates reflects on the particle configuration of the lanthanum manganite powder obtained by the calcination of the precipitates. Thus, it is eagerly desired to develop a method for the preparation of an unsubstituted or strontium-substituted lanthanum manganite powder having excellent uniformity both in the chemical composition without containing unreacted starting materials and in the particle configuration.

### SUMMARY OF THE INVENTION

The present invention accordingly has an object to provide a method for the preparation of an unsubstituted or strontium-substituted lanthanum manganite powder free from the above described problems and disadvantages in the prior art methods and having excellent uniformity both in the chemical composition without containing unreacted starting materials and in the particle configuration.

Thus, the method of the present invention for the preparation of a powder of an unsubstituted or strontium-substituted lanthanum manganite represented by the composition formula

(La₁₋ₓSrₓ)_{y}MnO_{z}, (I)

in which x is zero or a positive number not exceeding 0.5, y is a number in the range from 0.8 to 1 and z is a positive number not exceeding 3, comprises the steps of:
(a) adding, into an aqueous solution of a water-soluble carbonate as a precipitation medium, preferably, having a pH of 7 or higher, an aqueous solution of water-soluble inorganic salts of lanthanum and manganese in combination or lanthanum, strontium and manganese in combination having a pH in the range from 6 to 8 and an aqueous alkaline solution concurrently under agitation at such rates that the pH of the precipitation medium is kept in the range from 7 to 9 during the addition of the solutions to precipitate a composite carbonate of lanthanum and manganese or lanthanum, strontium and manganese, the amount of the water-soluble carbonate in the precipitation medium being sufficient to precipitate all of the elements of lanthanum and manganese or lanthanum, strontium and manganese added thereto;
(b) collecting the precipitates of the composite carbonate by separating from the precipitation medium; and
(c) drying and calcining the precipitates of the composite carbonate.

### DETAILED DESCRIPTION OF THE PREFERRED EMBODIMENTS

As is described above, the method of the invention essentially comprises the steps (a), (b) and (c) of which the most characteristic feature of the invention consists in step (a) while steps (b) and (c) are rather conventional.

In step (a), an aqueous solution of water-soluble salts or, preferably, inorganic salts of lanthanum, manganese and, when desired, strontium, referred to as the salt solution hereinafter, is prepared. Such an aqueous salt solution can be prepared by dissolving each a specified amount of oxides and/or carbonates of the respective elements together in an inorganic acid such as hydrochloric acid, sulfuric acid, nitric acid and the like, of which nitric acid is preferred in respect of the least contamination of the product obtained by calcination with the constituents derived from the inorganic acid. The proportion of the oxides and/or carbonates of lanthanum, manganese and strontium naturally depends on the chemical composition of the desired powder of a strontium-substituted or -unsubstituted lanthanum manganite expressed by the above given composition formula (I). Namely, the oxides and/or carbonates of lanthanum and strontium are taken in amounts of y(1-x) moles and yx moles per mole of the manganese oxide or carbonate calculated as the elements of lanthanum and strontium. The concentration of the respective inorganic salts of the metallic elements in the aqueous solution should be in the range from 0.01 to 3 moles/liter or, preferably, in the range from 1 to 2 moles/liter for each of the metallic elements. A difficulty is encountered when an aqueous salt solution having a still higher concentration is to be prepared due to incomplete dissolution of the respective oxides and/or carbonates while the productivity of the process is decreased when the concentration is too low. While the oxides and/or carbonates of these metallic elements cannot be dissolved completely when the acidity of the medium is low, the aqueous solution obtained by dissolving the oxides and/or carbonates in an inorganic acid still has considerable acidity so that it is essential that the aqueous solution has a pH adjusted in the range from 6 to 8 by the addition of an alkaline reagent which is preferably ammonia water.

Separately, an aqueous solution of a water-soluble carbonate, referred to as the carbonate solution hereinafter, is prepared and the above prepared salt solution is added to this carbonate solution as the precipitation medium. Although the water-soluble carbonate is not particularly limitative and carbonates and hydrogen carbonates of alkali metals such as sodium carbonate, sodium hydrogen carbonate, potassium carbonate and the like can be used, it is preferable to use ammonium carbonate or ammonium hydrogen carbonate as the water-soluble carbonate in order to avoid possible contamination of the product by the alkali metals. The concentration of the water-soluble carbonate, e.g. ammonium carbonate or ammonium hydrogen carbonate, in the carbonate solution is in the range from 1 to 250 g/liter or, preferably, from 10 to 30 g/liter or in the range from 0.01 to 3.2 moles/liter or, preferably, from 0.1 to 0.4 mole/liter relative to the carbonate ions. It is important that the carbonate solution has a pH in the range from 7 to 9 or, preferably, from 7.9 to 8.5. When the carbonate solution as prepared by dissolving a water-soluble carbonate in water has a pH not falling in this range, a pH controlling agent is added to the solution to bring the pH value in this range although an aqueous solution of ammonium carbonate or ammonium hydrogen carbonate usually has a pH in the range from 5 to 8. When the value of pH is too low, the precipitation reaction to form a composite carbonate of the elements cannot proceed to completeness while a too high value of the pH causes a difficulty in the solid-liquid separation of the precipitates from the precipitation medium. The amount of the water-soluble carbonate contained in the carbonate solution should be in the range from 1.5 to 3.0 times or, preferably, from 2.0 to 2.3 times of the stoichiometrically equivalent amount required for complete carbonate formation of lanthanum and manganese or lanthanum, strontium and manganese contained in the salt solution assuming that the precipitation product is a combination of lanthanum carbonate La₂(CO₃)₃, strontium carbonate SrCO₃ and manganese carbonate MnCO₃. Use of the water-soluble carbonate in a too small or too large amount is undesirable due to a possible decrease in the yield relative to the element of manganese resulting in deviation in the chemical composition of the product manganite from the desired chemical composition.

Step (a) of the inventive method is basically a process in which the salt solution and the carbonate solution are mixed together to effect precipitation of a composite carbonate of the respective metallic elements. These solutions can be at room temperature although it is optional to heat the solutions, if desired. It is essential in the invention, however, that the salt solution is added to the carbonate solution as the precipitation medium and not *vice versa*. It has been unexpectedly discovered that, when the carbonate solution is added to the salt solution to serve as the precipitation medium, to the contrary, the lanthanum ions in the salt solution react with the carbonate ions contained in the first introduced portion of the carbonate solution predominantly forming precipitates of lanthanum carbonate having a columnar or platelet-like particle configuration to cause exhaustion of the carbonate ions before the manganese ions or manganese ions and strontium ions may pertain to the carbonation reaction as a consequence of the difference in the reaction velocities. Accordingly, the manganese ions or strontium and manganese ions must react successively with the carbonate ions contained in the portions of the carbonate solution introduced into the salt solution at the later stage separately from the lanthanum ions so that the finally obtained precipitates of carbonate cannot be a homogeneous composite carbonate of the metallic elements but a mixture of the individual carbonates.

It is also an essential requirement that the pH value of the precipitation medium is kept in the range from 7 to 9 or, preferably, from 7.9 to 8.5 throughout the precipitation procedure. Since it is usual that addition of the salt solution to the carbonate solution as the precipitation medium causes a decrease in the pH value of the medium, the pH value of the medium can be maintained in the above mentioned range by the introduction of an additional amount of an aqueous alkaline solution, which is preferably ammonia water, under agitation concurrently with introduction of the salt solution under monitoring of the pH value of the medium at such controlled rates that the pH value of the medium never goes out of the above mentioned range. The disadvantages caused when the pH value is not maintained within the range are discussed above.

Since the composite carbonate formed in the above described manner consists of uniform fine particles having a globular particle configuration, no particular difficulties are encountered in the solid-liquid separation of the precipitates from the precipitation medium in step (b) of the inventive method by any conventional solid-liquid separation means including decantation, filtration, centrifugation and the like. In step (c) of the inventive method, the precipitates of the composite carbonate, after washing with water to be freed from the solutes in the precipitation medium, are dried and subjected to calcination at a temperature in the range from 700 to 1500 °C in an oxidizing atmosphere to give a strontium-substituted or unsubstituted lanthanum manganite powder consisting of a single crystalline phase of perovskite and having a relatively uniform particle size distribution not to exceed 1 µm. The calcination is usually complete within 1 hour though depending on the calcination temperature and other factors.

In the following, the method of the present invention is illustrated in more detail by way of examples and comparative examples, which, however, never limit the scope of the invention in any way.

### Example 1.

A salt solution was prepared by dissolving 2.82 g of lanthanum oxide, 2.55 g of strontium carbonate and 4.00 g of manganese carbonate in 16.3 ml of concentrated nitric acid followed by adjustment of the pH of the solution to 7.2 by the addition of 3% ammonia water. The concentrations of the respective elements of lanthanum, strontium and manganese were 1.06, 1.06 and 2.12 moles/liter, respectively, corresponding to each 0.5 mole of lanthanum and strontium per mole of manganese.

Separately, 15.0 g of ammonium carbonate were dissolved in 700 ml of deionized water to give an aqueous carbonate solution having a pH of 8, into which the above prepared salt solution and a 3% ammonia water were concurrently added under agitation with monitoring of the pH of the medium at such controlled rates that the pH of the precipitation medium was always kept in the range from 8.2 to 8.5 to form precipitates. The thus formed precipitates of a composite carbonate collected by filtration and dried by heating at 120°C were found to consist of fine globular particles having a particle diameter not exceeding 0.1 µm without containing columnar or platelet-like particles as shown by a scanning electron microscopic photograph. Calcination of the carbonate particles conducted at 900°C for 20 hours in air gave 7.3 g of a powder of a strontium-substituted lanthanum manganite expressed by the composition formula (La_{0.5}Sr_{0.5})MnO_{z}, z being a positive number not exceeding 3, consisting of a single crystalline phase of perovskite as examined by the X-ray diffractometry and a relatively uniform particle size distribution with a particle diameter not exceeding 1 µm.

### Example 2.

A salt solution was prepared by dissolving 3.60 g of lanthanum oxide, 0.81 g of strontium carbonate and 4.00 g of manganese carbonate in 15.5 ml of concentrated nitric acid followed by adjustment of the pH of the solution to 7.0 by the addition of 3% ammonia water. The concentration of the respective elements of lanthanum, strontium and manganese were 1.43, 0.35 and 2.25 moles/liter, respectively, corresponding to 0.64 mole of lanthanum and 0.16 mole of strontium per mole of manganese.

Separately, 11.8 g of ammonium carbonate were dissolved in 700 ml of deionized water to give an aqueous carbonate solution having a pH of 8.4, into which the above prepared salt solution and a 3% ammonia water were concurrently added under agitation with monitoring of the pH of the medium at such controlled rates that the pH of the precipitation medium was always kept in the range from 8.2 to 8.5 to form precipitates. The thus formed precipitates of a composite carbonate collected by filtration and dried by heating at 120°C were found to consist of fine globular particles having a particle diameter not exceeding 0.1 µm without containing columnar or platelet-like particles as shown by a scanning electron microscopic photograph. Calcination of the carbonate particles conducted at 900°C for 20 hours in air gave 6.9 g of a powder of a strontium-substituted lanthanum manganite expressed by the composition formula (La_{0.8}Sr_{0.2})_{0.8}MnO_{z}, z being a positive number not exceeding 3, consisting of a single crystalline phase of perovskite as examined by the X-ray diffractometry and a relatively uniform particle size distribution with a particle diameter not exceeding 1 µm.

### Example 3.

A salt solution was prepared by dissolving 5.62 g of lanthanum oxide and 4.00 g of manganese carbonate in 17.7 ml of concentrated nitric acid followed by adjustment of the pH of the solution to 7.1 by the addition of 3% ammonia water. The concentrations of the respective elements of lanthanum and manganese were each 1.95 moles/liter.

Separately, 13.6 g of ammonium hydrogen carbonate were dissolved in 700 ml of deionized water to give an aqueous carbonate solution having a pH of 7.5, into which the above prepared salt solution and a 3% ammonia water were concurrently added with agitation under monitoring of the pH of the medium at such controlled rates that the pH of the precipitation medium was always kept in the range from 7.9 to 8.4 to form precipitates. The thus formed precipitates of a composite carbonate collected by filtration and dried by heating at 120°C were found to consist of fine globular particles having a particle diameter not exceeding 0.1 µm without containing columnar or platelet-like particles from a scanning electron microscopic photograph. Calcination of the carbonate particles conducted at 900°C for 20 hours in air gave 8.3 g of a powder of a lanthanum manganite expressed by the composition formula LaMnO_{z}, z being a positive number not exceeding 3, consisting of a single crystalline phase of perovskite as examined by the X-ray diffractometry and a relatively uniform particle size distribution with a particle diameter not exceeding 1 µm.

### Comparative Example 1.

A uniform powder blend was prepared from 6.22 g of lanthanum oxide, 0.62 g of strontium carbonate and 4.87 g of manganese carbonate with addition of 12 ml of water as a wetting agent. After drying, the powder blend was subjected to calcination in air at 1200°C for 10 hours to give 10 g of a powder of strontium-substituted lanthanum manganite having a composition which should be expressed by the formula (La_{0.9}Sr_{0.1})MnO_{z}, z being a positive number not exceeding 3, according to the formulation of the starting materials. The powder, however, contained a considerable amount of lanthanum oxide as one of the starting materials left unreacted according to the result of the X-ray diffractometry although the principal phase had a crystalline structure of perovskite. A scanning electron microscopic photograph of the powder indicated existence of a considerable amount of platelet-like particles having a dimension of about 5 µm.

### Comparative Example 2.

A uniform powder blend was prepared from 3.60 g of lanthanum oxide, 0.81 g of strontium carbonate and 4.00 g of manganese carbonate with addition of 12 ml of water as a wetting agent. After drying, the powder blend was subjected to calcination in air at 1200°C for 10 hours to give 6.9 g of a powder of strontium-substituted lanthanum manganite having a composition which should be expressed by the formula (La_{0.8}Sr_{0.2})_{0.8}MnO_{z}, z being a positive number not exceeding 3, according to the formulation of the starting materials. The powder, however, contained a considerable amount of lanthanum oxide as one of the starting materials left unreacted according to the result of the X-ray diffractometry although the principal phase had a crystalline structure of perovskite. A scanning electron microscopic photograph of the powder indicated existence of a considerable amount of platelet-like particles having a dimension of about 5 µm.

### Example 4.

A salt solution was prepared by dissolving 6.22 g of lanthanum oxide, 0.62 g of strontium carbonate and 4.87 g of manganese carbonate in 16.5 ml of concentrated nitric acid followed by adjustment of the pH of the solution to 7.2 by the addition of 3% ammonia water. The concentration of the respective elements of lanthanum, strontium and manganese were 2.31, 0.25 and 2.56 moles/liter, respectively, corresponding to 0.90 mole of lanthanum and 0.10 mole of strontium per mole of manganese.

Separately, 19.9 g of ammonium carbonate were dissolved in 700 ml of deionized water to give an aqueous carbonate solution having a pH of 8.3, into which the above prepared salt solution and a 3% ammonia water were concurrently added under agitation with monitoring of the pH of the medium at such controlled rates that the pH of the precipitation medium was always kept in the range from 8.0 to 8.5 to form precipitates. The thus formed precipitates of a composite carbonate collected by filtration and dried by heating at 120 °C were found to consist of fine globular particles having a particle diameter not exceeding 0.1 µm without containing columnar or platelet-like particles as shown by a scanning electron microscopic photograph. Calcination of the carbonate particles conducted at 900 °C for 20 hours in air gave 10 g of a powder of a strontium-substituted lanthanum manganite expressed by the composition formula (La_{0.9}Sr_{0.1})MnO_{z}, z being a positive number not exceeding 3, consisting of a single crystalline phase of perovskite as examined by the X-ray diffractometry and a relatively uniform particle size distribution with a particle diameter not exceeding 1 µm.

### Comparative Example 3.

A salt solution was prepared by dissolving 6.22 g of lanthanum oxide, 0.62 g of strontium carbonate and 4.87 g of manganese carbonate in 16.5 ml of concentrated nitric acid. The solution had a pH of 2.1.The concentrations of the respective elements of lanthanum, strontium and manganese were 2.31, 0.25 and 2.56 moles/liter, respectively, corresponding to 0.9 mole and 0.1 mole of lanthanum and strontium, respectively, per mole of manganese.

Separately, 19.9 g of ammonium carbonate were dissolved in 700 ml of deionized water to give an aqueous carbonate solution having a pH of 5.6, which was added to the above prepared salt solution with agitation to form precipitates. The thus formed precipitates of a composite carbonate collected by filtration and dried by heating at 120 °C were found to contain platelet-like particles having a dimension of about 5 µm as shown by a scanning electron microscopic photograph. Calcination of the carbonate particles conducted at 1000 °C for 20 hours in air gave 10 g of a powder of a strontium-substituted lanthanum manganite having a composition which should be expressed by the composition formula (La_{0.9}Sr_{0.1})MnO_{z}, z being a positive number not exceeding 3, from the formulation of the starting materials. The powder still contained platelet-like particles and unreacted lanthanum oxide could be detected by the X-ray diffractometry.

## Claims

1. A method for the preparation of a powder of an unsubstituted or strontium-substituted lanthanum manganite represented by the composition formula
(La₁₋ₓSrₓ)_{y}MnO_{z},
in which x is zero or a positive number not exceeding 0.5, y is a number in the range from 0.8 to 1 and z is a positive number not exceeding 3, which comprises the steps of:
(a) adding, into a first aqueous solution of a water-soluble carbonate as a precipitation medium having a pH of 7 or higher, a second aqueous solution of water-soluble inorganic salts of lanthanum and manganese in combination or lanthanum, strontium and manganese in combination having a pH in the range from 6 to 8 and an aqueous alkaline solution concurrently under agitation at such rates that the pH of the precipitation medium is kept in the range from 7 to 9 during the addition of the second aqueous solution to the first aqueous solution to precipitate a composite carbonate of lanthanum and manganese or lanthanum, strontium and manganese, the amount of the water-soluble carbonate in the precipitation medium being sufficient to precipitate all of the elements of lanthanum and manganese or lanthanum, strontium and manganese in the second aqueous solution added thereto;
(b) collecting the precipitates of the composite carbonate by separating from the precipitation medium; and
(c) drying and calcining the precipitates of the composite carbonate.

2. The method for the preparation of a powder of an unsubstituted or strontium-substituted lanthanum manganite as claimed in claim 1 in which the water-soluble carbonate is ammonium carbonate or ammonium hydrogen carbonate.

3. The method for the preparation of a powder of an unsubstituted or strontium-substituted lanthanum manganite as claimed in claim 1 in which the water-soluble salts of lanthanum, strontium and manganese are each a nitrate of the respective element.

4. The method for the preparation of a powder of an unsubstituted or strontium-substituted lanthanum manganite as claimed in claim 3 in which the concentration of each of the nitrates of lanthanum, strontium and manganese in the second aqueous solution is in the range from 0.01 to 3 moles/liter.

5. The method for the preparation of a powder of an unsubstituted or strontium-substituted lanthanum manganite as claimed in claim 1 in which the concentration of the water-soluble carbonate in the first aqueous solution is in the range from 0.01 to 3.2 moles/liter.

6. The method for the preparation of a powder of an unsubstituted or strontium-substituted lanthanum manganite as claimed in claim 1 in which the first aqueous solution of the water-soluble carbonate has a pH in the range from 7 to 9.

7. The method for the preparation of a powder of an unsubstituted or strontium-substituted lanthanum manganite as claimed in claim 6 in which the first aqueous solution of the water-soluble carbonate has a pH in the range from 7.9 to 8.5.

8. The method for the preparation of a powder of an unsubstituted or strontium-substituted lanthanum manganite as claimed in claim 1 in which the amount of the water-soluble carbonate in the first aqueous solution is in the range from 1.5 to 3.0 times of the stoichiometrically equivalent amount to the water-soluble inorganic salts of lanthanum, strontium and manganese in the second aqueous solution.

9. The method for the preparation of a powder of an unsubstituted or strontium-substituted lanthanum manganite as claimed in claim 1 in which the aqueous alkaline solution is ammonia water.

10. The method for the preparation of a powder of an unsubstituted or strontium-substituted lanthanum manganite as claimed in claim 1 in which the pH of the precipitation medium during addition of the second aqueous solution to the first aqueous solution is kept in the range from 7.9 to 8.5.

## Patentansprüche

1. Verfahren zur Herstellung eines Pulvers eines nichtsubstituierten oder strontiumsubstituierten Lanthanmanganits, dargestellt durch die Summenformel
(La₁₋ₓSrₓ)_{y}MnO_{z},
worin x Null oder eine 0,5 nicht überschreitende positive Zahl ist, y eine Zahl im Bereich von 0,8 bis 1 ist und z eine 3 nicht überschreitende positive Zahl ist, welches Verfahren die folgenden Schritte umfaßt:
(a) Gleichzeitiges Zufügen einer zweiten wässrigen Lösung wasserlöslicher anorganischer Lanthan- und Mangan-Salze in Kombination oder Lanthan-, Strontium- und Mangan-Salze in Kombination mit einem pH-Wert im Bereich von 6 bis 8 und einer wässrigen alkalischen Lösung zu einer ersten wässrigen Lösung eines wasserlöslichen Karbonats als Abscheidungsmedium mit einem pH-Wert von 7 oder größer unter Rühren mit einer derartigen Rührgeschwindigkeit, daß der pH-Wert des Abschaltungsmediums während des Zufügens der zweiten wässrigen Lösung zu der ersten wässrigen Lösung im Bereich von 7 bis 9 gehalten wird, um ein zusammengesetztes Karbonat aus Lanthan und Mangan oder Lanthan, Strontium und Mangan abzuscheiden, wobei die Menge des wässerlöslichen Karbonats in dem Abscheidungsmedium ausreichend ist, um sämtliche Lanthan- und Manganelemente oder Lanthan-, Strontium- und Manganelemente der zugefügten zweiten wässrigen Lösung abzuscheiden,
(b) Sammeln der abgeschiedenen zusammengesetzten Karbonate durch Trennen von dem Abscheidungsmedium und
(c) Trocknen und Kalzinieren der abgeschiedenen zusammengesetzten Karbonate.

2. Verfahren zur Herstellung eines Pulvers eines nichtsubstituierten oder strontiumsubstituierten Lanthanmanganits nach Anspruch 1, in welchem das wasserlösliche Karbonat Ammoniumkarbonat oder Ammoniumhydrogenkarbonat ist.

3. Verfahren zur Herstellung eines Pulvers eines nichtsubstituierten oder strontiumsubstituierten Lanthanmanganits nach Anspruch 1, in welchem die wasserlöslichen Lanthan-, Strontium- und Mangan-Salze jeweils ein Nitrat des betreffenden Elementes sind.

4. Verfahren zur Herstellung eines Pulvers eines nichtsubstituierten oder strontiumsubstituierten Lanthanmanganits nach Anspruch 3, in welchem die Konzentration jedes der Lanthan-, Strontium- und Mangannitrate in der zweiten wässrigen Lösung im Bereich von 0,01 bis 3 Mol/Liter liegt.

5. Verfahren zur Herstellung eines Pulvers eines nichtsubstituierten oder strontiumsubstituierten Lanthanmanganits nach Anspruch 1, in welchem die Konzentration des wasserlöslichen Karbonats in der ersten wässrigen Lösung im Bereich von 0,01 bis 3,2 Mol/Liter liegt.

6. Verfahren zur Herstellung eines Pulvers eines nichtsubstituierten oder strontiumsubstituierten Lanthanmanganits nach Anspruch 1, in welchem die erste wässrige Lösung des wasserlöslichen Karbonats einen pH-Wert im Bereich von 7 bis 9 hat.

7. Verfahren zur Herstellung eines Pulvers eines nichtsubstituierten oder strontiumsubstituierten Lanthanmanganits nach Anspruch 6, in welchem die erste wässrige Lösung des wasserlöslichen Karbonats einen pH-Wert in dem Bereich von 7,9 bis 8,5 hat.

8. Verfahren zur Herstellung eines Pulvers eines nichtsubstituierten oder strontiumsubstituierten Lanthanmanganits nach Anspruch 1, in welchem die Menge des wasserlöslichen Karbonats in der ersten wässrigen Lösung im Bereich vom 1,5- bis 3-fachen der stöchiometrisch äquivalenten Menge des wasserlöslichen anorganischen Lanthan-, Strontium- und Mangan-Salzes in der zweiten wässrigen Lösung liegt.

9. Verfahren zur Herstellung eines Pulvers eines nichtsubstituierten oder strontiumsubstituierten Lanthanmanganits nach Anspruch 1, in welchem die wässrige alkalische Lösung Ammoniakwasser ist.

10. Verfahren zur Herstellung eines Pulvers eines nichtsubstituierten oder strontiumsubstituierten Lanthanmanganits nach Anspruch 1, in welchem der pH-Wert des Abscheidungsmediums während des Zufügens der zweiten wässrigen Lösung zu der ersten wässrigen Lösung in dem Bereich von 7,9 bis 8,5 gehalten wird.

## Revendications

1. Procédé pour préparer une poudre d'un manganite de lanthane, non substitué, ou substitué par du strontium, représenté par la formule développée suivante :
(La₁₋ₓSrₓ)_{y}MnO_{z},
dans laquelle x vaut zéro ou est un nombre positif non supérieur à 0,5, y est un nombre compris dans l'intervalle de 0,8 à 1, et z est un nombre positif non supérieur à 3, qui comprend les étapes consistant :
(a) à ajouter à une première solution aqueuse d'un carbonate soluble dans l'eau, en tant que milieu de précipitation ayant un pH de 7 ou plus, une deuxième solution aqueuse de sels minéraux solubles dans l'eau de lanthane et de manganèse, en combinaison, ou de lanthane, de strontium et de manganèse en combinaison, ayant un pH compris dans l'intervalle de 6 à 8, et simultanément une solution alcaline aqueuse, sous agitation, à des débits tels que le pH du milieu de précipitation soit maintenu dans l'intervalle de 7 à 9 pendant l'addition de la deuxième solution aqueuse à la première solution aqueuse, pour provoquer la précipitation d'un carbonate composite de lanthane et de manganèse, ou de lanthane, de strontium et de manganèse, la quantité du carbonate soluble dans l'eau dans le milieu de précipitation étant suffisante pour provoquer la précipitation de la totalité des éléments à base de lanthane et de manganèse ou de lanthane, de strontium et de manganèse dans la deuxième solution aqueuse qui y a été ajoutée ;
(b) à recueillir les précipités du carbonate composite, en en séparant le milieu de précipitation ; et
(c) à sécher et calciner les précipités du carbonate composite.

2. Procédé de préparation d'une poudre d'un manganite de lanthane non substitué ou substitué par du strontium selon la revendication 1, dans lequel le carbonate soluble dans l'eau est le carbonate d'ammonium ou l'hydrogénocarbonate d'ammonium.

3. Procédé de préparation d'une poudre d'un manganite de lanthane non substitué ou substitué par du strontium selon la revendication 1, dans lequel les sels solubles dans l'eau du lanthane, du strontium et du manganèse sont tous des nitrates de l'élément correspondant.

4. Procédé de préparation d'une poudre d'un manganite de lanthane non substitué ou substitué par du strontium selon la revendication 3, dans lequel la concentration de chacun des nitrates de lanthane, de strontium et de manganèse dans la deuxième solution aqueuse est comprise dans l'intervalle de 0,01 à 3 moles/litre.

5. Procédé de préparation d'une poudre d'un manganite de lanthane non substitué ou substitué par du strontium selon la revendication 1, dans lequel la concentration du carbonate soluble dans l'eau dans la première solution aqueuses est comprise dans l'intervalle de 0,01 à 3,2 moles/litre.

6. Procédé de préparation d'une poudre d'un manganite de lanthane non substitué ou substitué par du strontium selon la revendication 1, dans lequel la première solution aqueuse du carbonate soluble dans l'eau a un pH compris entre 7 et 9.

7. Procédé de préparation d'une poudre d'un manganite de lanthane non substitué ou substitué par du strontium selon la revendication 6, dans lequel la première solution aqueuse du carbonate soluble dans l'eau a un pH compris entre 7,9 et 8,5.

8. Procédé de préparation d'une poudre d'un manganite de lanthane non substitué ou substitué par du strontium selon la revendication 1, dans lequel la quantité du carbonate soluble dans l'eau dans la première solution aqueuse est comprise dans l'intervalle de 1,5 à 3,0 fois la quantité qui, d'un point de vue stoechiométrique, est équivalente à celle des sels minéraux solubles dans l'eau du lanthane, du strontium et du manganèse dans la deuxième solution aqueuse.

9. Procédé de préparation d'une poudre d'un manganite de lanthane non substitué ou substitué par du strontium selon la revendication 1, dans lequel la solution alcaline aqueuse est constituée d'ammoniaque.

10. Procédé de préparation d'une poudre d'un manganite de lanthane non substitué ou substitué par du strontium selon la revendication 1, dans lequel le pH du milieu de précipitation pendant l'addition de la deuxième solution aqueuse à la première solution aqueuse est maintenu dans l'intervalle de 7,9 à 8,5.
